# EUROPEAN PATENT SPECIFICATION

(11) **EP 1 798 069 B1**
(45) Date of publication and mention of the grant of the patent: **28.10.2009**
(21) Application number: 06125990.9
(22) Date of filing: 13.12.2006
(51) Int. Cl.: B60C 11/16

(54) **Stud for studded tyre**
Spikes für Spike-Reifen
Clou pour pneu clouté

(30) Priority: 16.12.2005 FI 20055676
(43) Date of publication of application: 20.06.2007
(73) Proprietor: Scason Oy, 20380 Turku (FI)
(72) Inventor: Hagelin, Pentti, 20780, Kaarina (FI)
(74) Representative: Valkeiskangas, Tapio Lassi Paavali

(56) References cited:
- WO-A-99/56976
- JP-A- 58 012 806
- JP-A- 58 043 806
- US-A1- 2004 163 746

## Description

The invention relates to a stud in a studded tyre comprising a body and a stud pin arranged therein, and the body comprising an upper surface that when mounting the stud in the stud hole of the studded tyre is intended to be placed in the area of the wear surface of the tyre or in the vicinity thereof, and a lower surface that when mounting the stud in the stud hole of the studded tyre is intended to be placed in the vicinity of the bottom of the stud hole, whereby the first end of the stud pin is arranged to protrude from the upper surface of the body and a second end is arranged inside the body.

Several types of studs for studded tyres have been developed over the last decades. Very different aims and special conditions have been set for the studs at different times. In the beginning the only object was to achieve a grip that was as good as possible. What became a problem was mainly how to keep the stud in the tyre, but also the wear resistance. No restrictions were set to the protrusion and the piercing force of the stud. With time the property of the studs wearing out the roads emerged and restrictions were set for the stud protrusions and the piercing force of the studs in the tyres used in general traffic that had an effect on the structure of the studs.

Examples of solutions developed during the decades are described for instance in FI patent publication 82815 and FI patent applications 864821 and 20021966.

As further examples of the prior art WO 99/56976, US 2004/163746 A1, JP 58 012806 A and JP 58043806 A can be mentioned.

Owing to the different special conditions and restrictions created with time, the design of the stud has proven to be a more and more difficult task, since the stud is to be a compromise, in which the idea is to achieve a good grip in different driving conditions and on different road surfaces. In addition, presently the studs may not wear the roads excessively, in other words the protrusion and the piercing force of the stud should remain within permissible limits and they may not substantially change while in use. The stud should not wear too fast either, since the grip properties of a worn stud are poor, and the stud is to remain appropriately fastened and be placed in a correct position in the tyre. Furthermore, the stud should be advantageous to manufacture technically, since the manufacturing costs are to remain at a realistic level.

As a whole the stud in the studded tyre is presently a compromise, in which different regulations and standards set by the authorities must be taken into account. In addition the object is to provide good grip properties, which also with wear remain impeccable, and appropriate wear resistance as well as realistic manufacturing costs. Consequently several factors have to be taken into account, which in practice is very difficult.

The solutions according to the prior art have not been able to provide the best possible end result. This has become apparent as various new solutions are constantly being developed by different manufacturers regardless of the fact that development work has been intensively carried out since the 1960's.

What is rapidly observed when examining the stud in the studded tyre is that it comprises two main parts, a body of the stud and a stud pin made of hard metal fastened to the body. Taking into account the currently valid regulations it has been observed that two factors are of importance when considering the whole, i.e. the size of the contact area of the stud pin and the consumption of raw material used for manufacturing the stud pin. The size of the contact area is associated with the size of the grip area of the stud pin and the consumption of raw material used for manufacturing the stud pin is in turn associated directly with the manufacturing costs, since the raw material used for manufacturing the stud pin is expensive and forms a significant expense in connection with the manufacturing of studs.

Conventionally the shape of the stud pin of the stud intended to be used in general traffic has been circular in cross section. However, in recent years stud pins that are square or oval-shaped in cross section have also been introduced. However, a problem with the stud pins shaped in such a new manner is that mounting the stud pin in the body has become a difficult stage, since such stud pins must be mounted in the body in a particular position, in which case considerable sums are easily invested for special tools required in mounting, whereby the manufacturing costs easily increase significantly.

It is an object of the invention to provide a stud in a studded tyre that allows eliminating the drawbacks of the prior art and providing a stud, by means of which several factors can be considered and achieve the best possible end result. This is achieved with a stud in a studded tyre according to the invention. The stud in the studded tyre according to the invention is characterized in that the cross sectional shape of the stud pin is arranged to change in the longitudinal direction of the stud pin, seen from the first end to the second end, from a substantially triangular shape to a substantially circular shape.

An advantage of the invention is above all that the invention allows fulfilling all the criteria presently set for studs in an advantageous manner, meaning that the stud according to the invention allows achieving good grip and resistance properties in different situations and on different driving surfaces and the restrictions set by the authorities will not cause any problems. As regards manufacturing, the invention provides such an advantage in comparison with the prior art that the stud pin being of a triangular shape in cross section can be mounted in the body of the stud in any position, thus accelerating the manufacture compared with the prior art. Another advantage is provided when studding the tyre as the stud is always correctly positioned in the tyre, meaning that the stud pin of triangular shape is automatically in such a position that irrespective of the direction of movement always offers the best possible grip, no matter if acceleration grip, braking grip or lateral grip is concerned. A result of the stud being automatically set in the correct position is that while using the invention the studding does not require expensive special tools and therefore no large investments either. A further advantage of the invention is the flexibility, as the invention may preferably be applied to different types of studs, meaning that the basic idea of the invention may preferably be applied in connection with different stud structures. Thus the stud according to the invention can preferably be applied to be used in very different types of tyres.

In the following the invention will be described in greater detail by means of the embodiment shown in the accompanying drawing, where
Figure 1 schematically shows a top view of an embodiment of a stud in a studded tyre according to the invention,
Figure 2 schematically shows a side view of the stud shown in Figure 1,
Figure 3 schematically shows a bottom view of the stud shown in Figures 1 and 2,
Figure 4 schematically shows a perspective view of the stud shown in Figures 1 to 3,
Figure 5 schematically shows a top view of a stud pin of the stud shown in Figures 1 to 4,
Figure 6 schematically shows a side view of the stud pin shown in Figure 5.

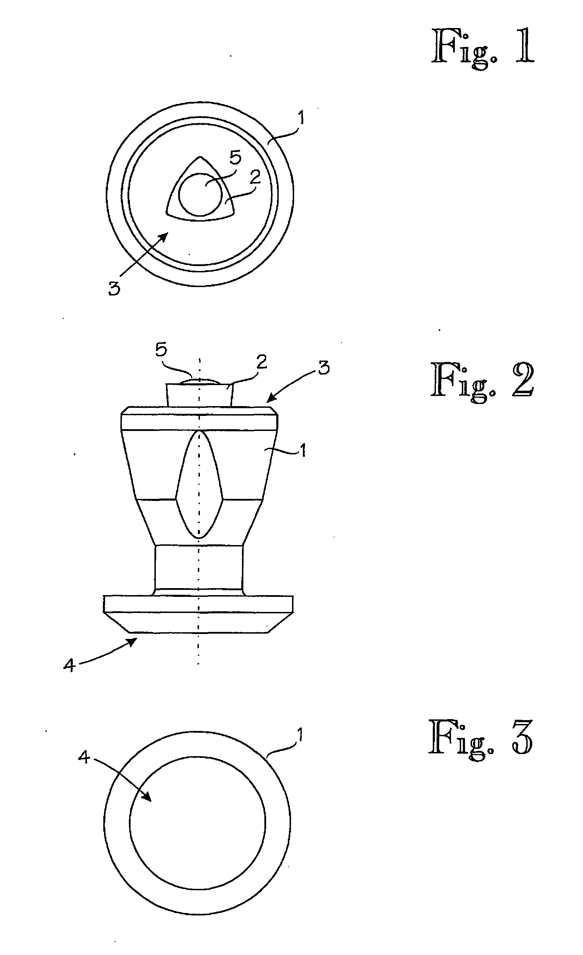

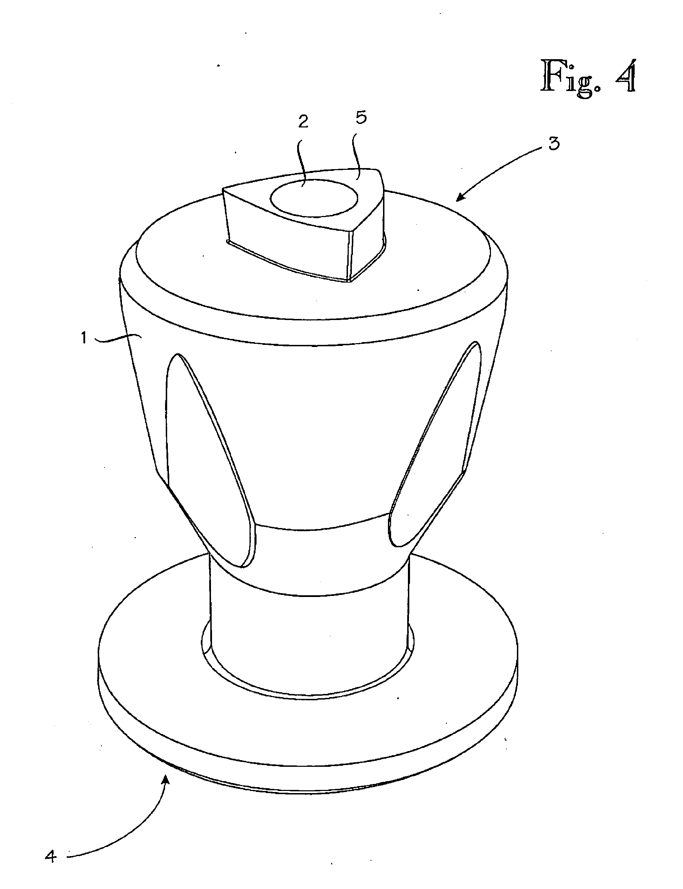

Figures 1 to 4 show an embodiment of a stud in a studded tyre according to the invention. The stud comprises a body 1 and a stud pin 2 arranged therein. The body 1 comprises an upper surface 3, which when mounting the stud in a stud hole of the studded tyre is intended to be placed in the area of the wear surface of the tyre or in the vicinity thereof. The body also comprises a lower surface 4, which when mounting the stud in a stud hole of the studded tyre is intended to be placed in the vicinity of the stud hole. The first end of the stud pin 2 is arranged inside the body 1. The upper surface, i.e. the surface that is pressed against the road surface, of the first end in the stud pin of the stud intended to be used in normal general road traffic is substantially planar as shown in the Figures.

The facts described above form part of a completely conventional technology to those skilled in the art, and such facts are therefore not explained in more detail in this context.

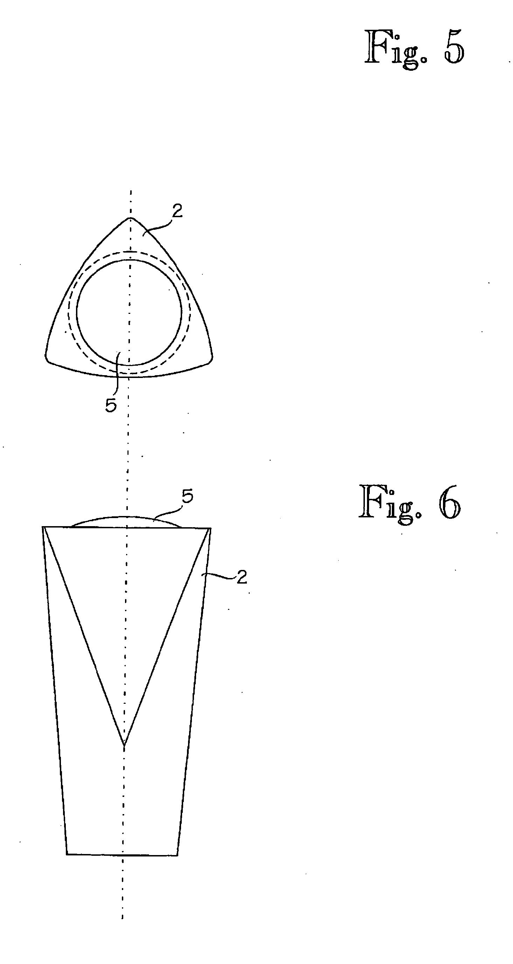

According to an essential idea of the invention a first end protruding from the upper surface 3 of the body 1 of the stud pin 2 is substantially of a triangular shape in cross section. The substantially triangular shape of the first protruding end of the stud pin 2 is clearly visibly in Figure 1. The triangular shape is also clearly visible from Figures 5 and 6, in which only the stud pin 2 is shown.

What is also characteristic to the invention is that the substantially triangular shape of the first end of the stud pin 2 is arranged to extend inside the body 1 of the stud. It is also preferable that the shape of the stud pin 2 in cross section is arranged to change in the longitudinal direction of the stud pin 2, seen from the first end to the second end, from a substantially triangular shape to a substantially circular shape. The facts mentioned above are clearly visible in the Figures. The continuation of the triangular shape in cross section for relatively far, when transferring from the first end of the stud pin 2 towards the second end, is shown in Figure 6. What can be seen when comparing for instance Figure 6 to Figure 2 is how the triangular shape of the stud pin in cross section extends inside the body 1. Changing the triangular shape of the stud pin in cross section to be substantially circular is shown in Figures 5 and 6.

The stud pin 2 of the stud in the studded tyre according to the invention is further arranged to taper when viewed from the first end to the second end. This feature is particularly clearly visible in Figure 6. As regards the tapering structure of the stud pin 2 the first end of the stud pin 2 is formed of the surfaces providing the substantially triangular shape in cross section that are arranged at an oblique angle in relation to the upper surface 3 of the body 1. This feature is clearly visible in Figures 6, 2 and 4. As shown in said Figures the surfaces forming the first end of the stud pin 2 are arranged to form a structure that widens when viewed from the upper surface 3 of the body 1 to the first end of the stud pin 2.

In the embodiments shown in the Figures the side surfaces providing the substantially triangular shape of the stud pin 2 in cross section are formed as substantially arched surfaces. The arched surfaces may preferably be convex surfaces as shown in the Figures. What may preferably be arranged on the upper surface of the first end of the stud pin 2 is a surface 5 resembling a segment of a sphere.

The embodiment of the invention shown above is not intended to restrict the invention in any way, instead the invention may be modified freely within the scope of the claims. It is therefore apparent that the stud according to the invention or the details thereof need not necessarily be exactly as those shown in the Figures, but other types of solutions are also possible. The invention is not for instance in anyway restricted to the body shown in the Figures, and the body may be different from the one shown in the Figures. The body does not have to include recesses and the shape and number of the flange parts may vary freely according to need. The invention is not either limited in any way to any particular manufacturing material, but the invention may be used with all the materials that are used for manufacturing studs.

## Claims

1. A stud in a studded tyre comprising a body (1) and a stud pin (2) arranged therein, and the body (1) comprising an upper surface (3) that when mounting the stud in the stud hole of the studded tyre is intended to be placed in the area of the wear surface of the tyre or in the vicinity thereof, and a lower surface (4) that when mounting the stud in the stud hole of the studded tyre is intended to be placed in the vicinity of the bottom of the stud hole, whereby a first end of the stud pin (2) is arranged to protrude from the upper surface (3) of the body (1) and a second end is arranged inside the body (1), whereby the first end protruding from the upper surface (3) of the body (1) of the stud pin (2) is substantially triangular in cross section, **characterized in that** the cross sectional shape of the stud pin (2) is arranged to change in the longitudinal direction of the stud pin, seen from the first end to the second end, from a substantially triangular shape to a substantially circular shape.

2. A stud as claimed in claim 1, **characterized in that** the substantially triangular shape of the first end of the stud pin (2) is arranged to extend inside the body (1).

3. A stud as claimed in claim 1, **characterized in that** the stud pin (2) is arranged to taper when viewed from the first end to the second end.

4. A stud as claimed in claim 3, **characterized in that** the first end of the stud pin (2) is formed of surfaces providing a substantially triangular shape in cross section that are arranged at an oblique angle in relation to the upper surface (3) of the body (1).

5. A stud as claimed in claim 4, **characterized in that** the surfaces forming the first end of the stud pin (2) are arranged to from a widening structure viewed from the upper surface (3) of the body (1) to the first end of the stud pin (2).

6. stud as claimed in claim 1, **characterized in that** side surfaces providing the substantially triangular shape in cross section are formed as substantially arched surfaces.

7. A stud as claimed in claim 6, **characterized in that** the arched surfaces are convex surfaces.

8. A stud as claimed in claim 1, **characterized in that** a surface (5) resembling substantially a segment of a sphere is arranged on the upper surface of the first end of the stud pin (2).

## Patentansprüche

1. Spike in einem bespikten Reifen, aufweisend einen Körper (1) und einen darin angeordneten Spikestift (2), wobei der Körper (1) eine obere Fläche (3), die sich bei einem im Spikeloch des Spikereifen montierten Spikes im Bereich der Verschleißfläche des Reifens oder in deren Nähe befindet, sowie eine untere Fläche (4) aufweist, die sich bei einem im Spikeloch des Spikereifen montierten Spikes in der Nähe des Bodens des Spikeloches befindet, wobei ein erstes Ende des Spikestiftes (2) von der oberen Fläche (3) des Körpers (1) abragt, und ein zweites Ende innerhalb des Körpers (1) angeordnet ist, wobei das von der oberen Fläche (3) des Körpers (1) des Spikestiftes (2) abragende erste Ende im Querschnitt im Wesentlichen dreiecksförmig ist,
**dadurch gekennzeichnet, dass** sich gesehen von dem ersten Ende zu dem zweiten Ende hin die Querschnittsform des Spikestiftes (2) in der Längsrichtung des Spikestiftes von einer im Wesentlichen dreieckigen Form in eine im Wesentlichen Kreisform ändert.

2. Spike nach Anspruch 1,
**dadurch gekennzeichnet, dass** sich die im Wesentlichen dreieckige Form des ersten Endes des Spikestiftes (2) in den Körper (1) erstreckt.

3. Spike nach Anspruch 1,
**dadurch gekennzeichnet, dass** sich der Spikestift (2) gesehen von dem ersten Ende zu dem zweiten Ende hin verjüngt.

4. Spike nach Anspruch 3,
**dadurch gekennzeichnet, dass** das erste Ende des Spikestiftes (2) aus Flächen gebildet ist, die im Querschnitt eine im Wesentlichen dreieckige Form bilden, die relativ zu der oberen Fläche (3) des Körpers (1) in einer geneigten Winkelstellung angeordnet sind.

5. Spike nach Anspruch 4,
**dadurch gekennzeichnet, dass** die das erste Ende des Spikestifts (2) bildenden Flächen aus der Sicht von der oberen Fläche (3) des Körper (1) zu dem ersten Ende des Spikestiftes (2) hin eine aufgeweitete Struktur bilden.

6. Spike nach Anspruch 1,
**dadurch gekennzeichnet, dass** Seitenflächen, die die im Querschnitt im Wesentlichen dreieckige Form bilden, als im Wesentlichen gekrümmte Flächen ausgebildet sind.

7. Spike nach Anspruch 6,
**dadurch gekennzeichnet, dass** die gekrümmten Flächen konvexe Flächen sind.

8. Spike nach Anspruch 1,
**dadurch gekennzeichnet, dass** eine Fläche (5), die im Wesentlichen einem sphärischen Segment gleicht, auf der oberen Fläche des ersten Endes des Spikestifts (2) angeordnet ist.

## Revendications

1. Clou pour pneu clouté comprenant un corps (1) et une tête de clou (2) aménagée sur lui, et le corps (1) comprenant une surface supérieure (3) qui, lorsque le clou est en place dans le trou du pneu clouté destiné à recevoir ce clou, est destinée à être placée dans la zone de la surface d'usure du pneu ou à proximité de cette zone, et une surface inférieure (4) qui, lorsque le clou est en place dans le trou du pneu clouté destiné à recevoir ce clou, est destinée à être placée à proximité du fond du trou destiné à recevoir le clou, une première extrémité de la tête de clou (2) étant aménagée de manière à faire saillie de la surface supérieure (3) du corps (1) et une deuxième extrémité étant aménagée à l'intérieur du corps (1), la première extrémité faisant saillie de la surface supérieure (3) du corps (1) de la tête de clou (2) présentant une section de forme substantiellement triangulaire, **caractérisé en ce que** la forme de la section transversale de la tête de clou (2) est aménagée de manière varier dans la direction longitudinale de la tête de clou, vue dans une direction allant de la première extrémité à la deuxième extrémité, depuis une forme substantiellement triangulaire vers une forme substantiellement circulaire.

2. Clou selon la revendication 1, **caractérisé en ce que** la forme substantiellement triangulaire de la première extrémité de la tête de clou (2) est aménagée de manière à s'étendre à l'intérieur du corps (1).

3. Clou selon la revendication 1**, caractérisé en ce que** la tête de clou (2) est aménagée de manière à aller en s'effilant lorsqu'elle est vue dans une direction allant de la première extrémité à la deuxième extrémité.

4. Clou selon la revendication 3, **caractérisé en ce que** la première extrémité de la tête de clou (2) est constituée de surfaces définissant une forme substantiellement triangulaire en section transversale qui sont agencées selon un angle oblique par rapport à la surface supérieure (3) du corps (1).

5. Clou selon la revendication 4, **caractérisé en ce que** les surfaces formant la première extrémité de la tête de clou (2) sont aménagées de manière à former une structure élargie lorsqu'elle est vue dans une direction allant de la surface supérieure (3) du corps (1) à la première extrémité de la tête de clou (2).

6. Clou selon la revendication 1, **caractérisé en ce que** des surfaces de côté qui confèrent la forme substantiellement triangulaire en section transversale sont conformées en tant que surfaces substantiellement arquées.

7. Clou selon la revendication 6, **caractérisé en ce que** les surfaces arquées sont des surfaces convexes.

8. Clou selon la revendication 1, **caractérisé en ce qu'**une surface (5) ressemblant substantiellement à une calotte sphérique est agencée sur la surface supérieure de la première extrémité de la tête de clou (2).
